# EUROPÄISCHE PATENTSCHRIFT

(11) **EP 1 924 801 B1**
(45) Veröffentlichungstag und Bekanntmachung des Hinweises auf die Patenterteilung: **20.07.2016**
(21) Anmeldenummer: 06742378.0
(22) Anmeldetag: 26.05.2006
(51) Int. Cl.: F02M 35/10, F01M 13/02, F16N 21/00, F16L 25/00, F16L 33/26, F16L 37/096

(54) **KUPPLUNGSSYSTEM**
COUPLING SYSTEM
SYSTEME D'ACCOUPLEMENT

(30) Priorität: 28.06.2005 DE 102005030457
(43) Veröffentlichungstag der Anmeldung: 28.05.2008
(73) Patentinhaber: Mahle International GmbH, 70376 Stuttgart (DE); FRÄNKISCHE ROHRWERKE Gebr. Kirchner GmbH & Co. KG, 97486 Königsberg (DE)
(72) Erfinder: BAUMANN, Andreas, 72622 Nürtingen (DE); PAULINI, Uwe, 73730 Esslingen (DE); REINERS, Frank, 71332 Waiblingen (DE); STEHLIG, Jürgen, 72654 Neckartenzlingen (DE); KRAUSS, Manfred, 97265 Hettstadt (DE); SCHRÖTER, Sören, 96103 Hallstadt (DE)
(74) Vertreter: BRP Renaud & Partner mbB Rechtsanwälte Patentanwälte Steuerberater
(86) Internationale Anmeldenummer: PCT/DE2006/000900
(87) Internationale Veröffentlichungsnummer: WO 2007/000125

(56) Entgegenhaltungen:
- EP-A- 0 843 084
- EP-A2- 1 176 303
- DE-A1- 4 436 267
- DE-C1- 4 429 498
- FR-A- 2 291 438
- GB-A- 1 525 797
- GB-A- 2 092 690

## Beschreibung

Die vorliegende Erfindung betrifft eine Brennkraftmaschine gemäß dem Oberbegriff des Anspruchs 1, bei der ein Schlauch einer Entlüftungseinrichtung mit Hilfe des Kupplungssystems an eine Frischluftanlage der Brennkraftmaschine angeschlossen ist.

Moderne Brennkraftmaschinen, insbesondere für Kraftfahrzeuge, sind mit einer Frischluftanlage zur Versorgung der Brennkraftmaschine mit Frischluft sowie mit einer Entlüftungseinrichtung zum Abführen von Blow-By-Gasen aus der Brennkraftmaschine ausgestattet.

Im Betrieb einer Kolben-Brennkraftmaschine gelangen Blow-By-Gase aufgrund unvermeidlicher Leckagen zwischen Kolben und Zylinder in ein Kurbelgehäuse der Brennkraftmaschine. Damit im Kurbelgehäuse kein unzulässig hoher Druck entsteht, werden die Blow-By-Gase mit Hilfe der Entlüftungseinrichtung abgeführt. Um dabei eine Umweltverschmutzung durch die Schadstoff beladenden Blow-By-Gase zu vermeiden, werden die Blow-By-Gase mit Hilfe der Entlüftungseinrichtung zweckmäßig der Frischluftanlage zugeführt, d.h., die Blow-By-Gase werden erneut der Verbrennung der Brennkraftmaschine zugeführt. Zu diesem Zweck ist ein Schlauch der Entlüftungseinrichtung über eine Buchse an eine Leitung der Frischluftanlage angeschlossen.

Für die Montage der Brennkraftmaschine muss besagter Schlauch an die Buchse der Leitung angeschlossen werden. Dieser Anschlussvorgang soll einerseits einhändig und ohne zusätzliches Werkzeug durchführbar sein, um Montagezeit zu sparen. Andererseits soll der Schlauch wieder von der Buchse zerstörungsfrei entfernt werden können, beispielsweise um Reparaturen durchführen zu können.

Es ist ein Connector bekannt, der einerseits einen Schlauchanschluss und andererseits einen Buchsenanschluss aufweist. Der Schlauchanschluss ist widerhakenartig gestuft und weist eine umlaufende Ringnut auf, in der ein Dichtring angeordnet ist. Auf diesen Schlauchanschluss kann ein Endabschnitt des Schlauchs aufgesteckt werden, um diesen fest und bleibend mit dem Connector zu verbinden. Hierzu wird der Endabschnitt des Schlauchs auf den Schlauchanschluss "aufgeschossen", das bedeutet, dass der Schlauch zumindest in seinem Endabschnitt erwärmt und anschließend auf den Schlauchanschluss aufgesteckt wird, wobei sich der Endabschnitt aufgrund der erhöhten Temperatur leicht elastisch aufweiten lässt. Beim anschließenden Abkühlen schrumpft der Endabschnitt stark zusammen und verhärtet sich, wodurch quasi eine Formschlussverbindung über die Stufen des Schlauchanschlusses realisiert wird. Die Verbindung zwischen Schlauch und Connector besitzt eine hohe Auszugsfestigkeit und ist nicht für ein lösbares Entfernen des Schlauchs vom Connector vorgesehen.

Im Unterschied dazu ist der Buchsenanschluss des Connectors mit einer lösbaren Verrastung versehen, die beim Aufstecken des Buchsenanschlusses auf die Buchse an dieser selbsttätig einrastet. Zum Lösen dieser Steckverbindung wird die Verrastung auf geeignete Weise aufgehoben, so dass der Buchsenanschluss zerstörungsfrei von der Buchse abgezogen werden kann. Im Buchsenanschluss sind Dichtringe angeordnet, die im montierten Zustand mit der darin eingesteckten Buchse zusammenwirken.

Mit Hilfe des bekannten Connectors kann der Schlauch der Entlüftungseinrichtung einfach über die Buchse an die Leitung der Frischluftanlage angeschlossen werden. Auch die Demontage ist einfach und zerstörungsfrei realisierbar. Nachteilig ist jedoch, dass ein derartiger Connector relativ teuer ist. Darüber hinaus benötigt dieser Connector an der Buchse einen vergleichsweise großen axialen Montageraum.

Eine gattungsgemäße Brennkraftmaschine ist aus der EP 1 176 303 A2 bekannt. Sie ist mit einer Frischluftanlage zur Versorgung der Brennkraftmaschine mit Frischluft und mit einer Entlüftungseinrichtung zum Abführen von Blow-by-Gasen aus der Brennkraftmaschine ausgestattet.

Aus der DE 44 29 498 C1 ist für einen Kühlkreis einer Brennkraftmaschine ein Kupplungssystem bekannt, mit dem ein Schlauch an eine Buchse einer Leitung angeschlossen ist, um Kühlmittel zu führen. Der Schlauch weist dabei an seinem Ende einen Stutzen auf, der in die Buchse eingesteckt ist und der an seiner Außenseite wenigstens eine Ringnut und eine Befestigungskontur aufweist. Die Buchse weist an ihrer Außenseite eine Rastkontur auf. Ferner ist ein bezüglich der Buchse und des Stutzens separat hergestelltes Kupplungselement vorgesehen, das außen auf den Stutzen aufgesteckt ist, das wenigstens einen Rasthaken aufweist, der bei in die Buchse eingestecktem Stutzen die Rastkontur hintergreift, und das wenigstens einen Befestigungshaken aufweist, der zur axialen Fixierung des Kupplungselements am Stutzen mit der Befestigungskontur zusammenwirkt.

Aus der DE 44 36 627 A1 ist für einen Kältekreis einer Klimaanlage ein anderes Kupplungssystem bekannt, das ohne Befestigungshaken zur axialen Fixierung des Kupplungselements am Stutzen auskommt.

Für medizinische Infusionssysteme ist aus der GB 2 092 690 A ein weiteres Kupplungssystem bekannt, bei dem jedoch das separate Kupplungselement nicht am Stutzen, sondern an der Buchse angeordnet ist. Außerdem ist bei diesem Kupplungssystem dem jeweiligen Rasthaken ein Lösehebel zugeordnet, der bei seiner Betätigung den Rasthaken von der am Stutzen ausgebildeten Rastkontur ausrastet, der eine vom Stutzen weg gerichtete Verlängerung des jeweiligen Rasthakens bildet und der von einem Basisring des Kupplungselements frei absteht.

Aus der FR 2 291 438 A1 ist ein anderes Kupplungssystem bekannt, bei dem ein Schlauch an seinem Ende einen Stutzen aufweist, der in eine Buchse einsteckbar ist und der an seiner Außenseite eine Ringnut und eine Befestigungskontur aufweist, wobei die Buchse an ihrer Außenseite eine Rastkontur aufweist, wobei ein bezüglich der Buchse und des Stutzens separat hergestelltes Kupplungselement vorgesehen ist, das außen auf den Stutzen aufgesteckt ist, wobei das Kupplungselement wenigstens einen Rasthaken aufweist, der bei in die Buchse eingestecktem Stutzen die Rastkontur hintergreift, und wobei das Kupplungselement wenigstens einen Befestigungshaken aufweist, der zur axialen Fixierung des Kupplungselements am Stutzen mit der Befestigungskontur zusammenwirkt.

Die vorliegende Erfindung beschäftigt sich mit dem Problem, für das Verbinden des Schlauchs der Entlüftungseinrichtung mit der Buchse eine vorteilhafte Möglichkeit aufzuzeigen, die sich insbesondere durch einen relativ kleinen axialen Montageraum auszeichnet.

Erfindungsgemäß wird dieses Problem durch den Gegenstand der unabhängigen Ansprüche 1 und 6 gelöst. Vorteilhafte Ausführungsformen sind Gegenstand der abhängigen Ansprüche.

Die Erfindung beruht auf dem allgemeinen Gedanken, die gewünschte Verbindung mit Hilfe eines Kupplungssystems zu realisieren, bei dem ein am Schlauch ausgebildeter Stutzen in die Buchse einsteckbar ist und mit Hilfe eines Kupplungselements an der Buchse festlegbar ist. Dabei ist das Kupplungselement bezüglich Buchse und Stutzen ein separat hergestelltes Bauteil, das einerseits mit Hilfe von wenigstens einem Befestigungshaken am Stutzen axial fixiert ist und andererseits mit Hilfe wenigstens eines Rasthakens an der Buchse verrastbar ist. Da der Stutzen in die Buchse eingreift, erfolgt die Abdichtung zwischen Buchse und Stutzen an der Innenseite der Buchse, während die Verrastung zwischen Kupplungselement und Buchse an der Außenseite der Buchse erfolgt. Hierdurch können die Abdichtung und die Verrastung im gleichen Axialbereich der Buchse realisiert werden, so dass das erfindungsgemäße Kupplungssystem an der Buchse mit wenig axialem Bauraum auskommt. Außerdem weist der jeweilige Rasthaken erfindungsgemäß einen Lösehebel auf, der bei seiner Betätigung den Rasthaken von der Rastkontur ausrastet, der eine von der Buchse weg gerichtete Verlängerung des jeweiligen Rasthakens bildet und der von einem Basisring des Kupplungselements frei absteht, der im gesteckten Zustand zumindest teilweise die Buchse übergreift. Hierdurch ergibt sich eine vereinfachte Betätigung zum Lösen der Steckverbindung.

Gemäß einer vorteilhaften Ausführungsform kann der jeweilige Stutzen mit dem Schlauch aus einem Stück hergestellt sein. Hierdurch ergibt sich eine preiswerte Herstellung für das Kupplungssystem. Insbesondere kann der Schlauch zusammen mit dem jeweiligen Stutzen als Blasformteil ausgestaltet sein. Auf diese Weise lässt sich das Anbringen des Stutzens am Schlauch besonders einfach und kostengünstig in die Herstellung des Schlauchs integrieren, wodurch eine Schnittstelle eingespart und eine Leckagemöglichkeit vermieden wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfacht, schaltplanartige Prinzipdarstellung einer Brennkraftmaschine nach der Erfindung,
- Fig. 2: eine perspektivische Ansicht auf ein Kupplungssystem nach der Erfindung,
- Fig. 3: eine Seitenansicht auf einen Schlauch mit dem Kupplungssystem,
- Fig. 4: einen Längsschnitt durch das Kupplungssystem,
- Fig. 5: eine Schnittansicht wie in Fig. 4, jedoch in einer anderen Schnittebene,
- Fig. 6: eine Schnittansicht wie in Fig. 5, jedoch bei einer anderen Ausführungsform.

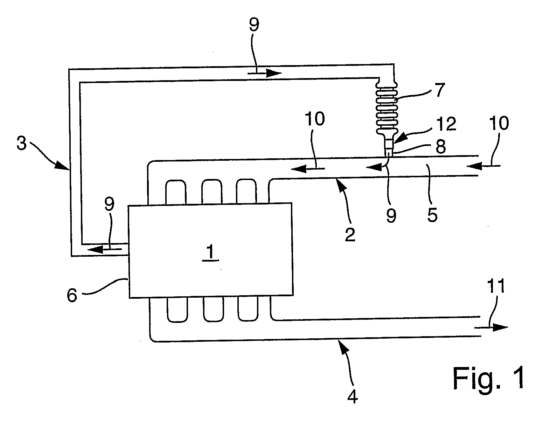

Entsprechend Fig. 1 ist eine erfindungsgemäße Brennkraftmaschine 1, insbesondere für ein Kraftfahrzeug, mit einer Frischluftanlage 2, mit einer Entlüftungseinrichtung 3 und zweckmäßig mit einer Abgasanlage 4 ausgestattet. Die Frischluftanlage 2 dient zur Versorgung der Brennkraftmaschine 1 mit Frischluft und umfasst zumindest eine Leitung 5. Die Frischluftanlage 2 kann dabei in üblicher Weise weitere, hier nicht gezeigte Komponenten, wie z.B. ein Frischluftfilter, enthalten.

Die Entlüftungseinrichtung 3 dient zum Abführen von Blow-By-Gasen aus der Brennkraftmaschine 1. Die Entlüftungseinrichtung 3 ist dazu einenends an einen Motorblock 6 der Brennkraftmaschine 1 angeschlossen und kommuniziert dort mit einem Kurbelgehäuse. Anderenends weist die Entlüftungseinrichtung 3 einen Schlauch 7 auf, der über eine Buchse 8 an die Leitung 5 angeschlossen ist. Die durch Pfeile symbolisierten Blow-By-Gase 9 können auf diese Weise der ebenfalls durch Pfeile symbolisierten Frischluft 10 zugeführt werden. Die Entlüftungseinrichtung 3 kann in üblicherweise weitere, hier nicht gezeigte Komponenten, wie z.B. ein Tröpfchenabscheider, aufweisen.

Die Abgasanlage 4 dient zum Abführen von durch einen Pfeil angedeuteten Verbrennungsabgasen 11 aus der Brennkraftmaschine 1. Auch die Abgasanlage 4 kann weitere, hier nicht dargestellte Komponenten, wie z.B. Schalldämpfer, Katalysator, Partikelfilter, aufweisen.

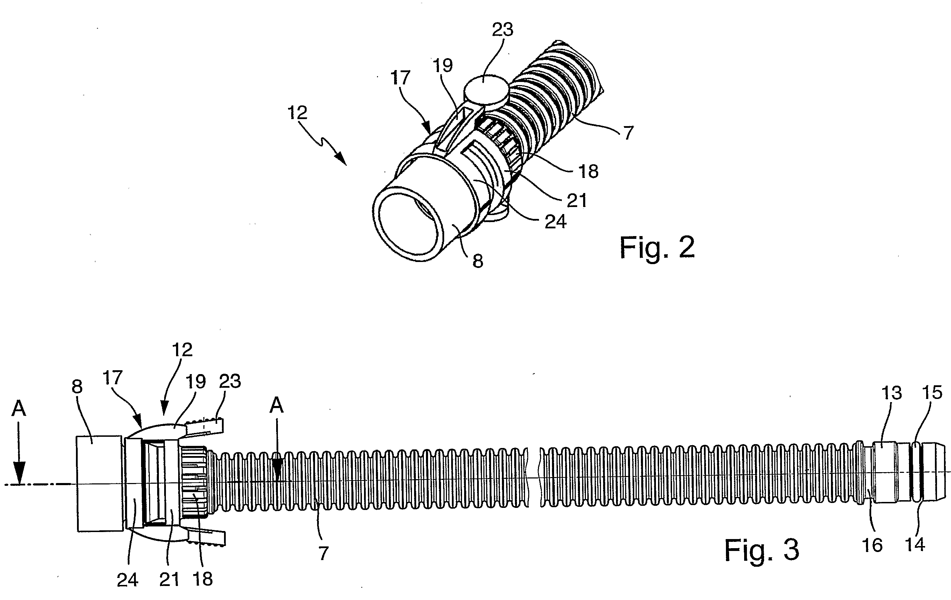

Erfindungsgemäß ist nun der Schlauch 7 mit Hilfe eines Kupplungssystems 12 an die Buchse 8 angeschlossen. Dieses Kupplungssystems 12 wird im folgenden anhand der Fig. 2 bis 6 näher erläutert.

Obwohl in dem hier näher erläuterten Beispiel die Buchse 8 an der Leitung 5 ausgebildet ist, kann bei einer anderen Anwendungsform die Buchse 8 auch an einem anderen Bauteil ausgebildet sein. Beispielsweise an einer Ölnebelabscheideeinrichtung oder am Kurbelgehäuse bzw. am Motorblock 6 der Brennkraftmaschine 1.

Entsprechend den Fig. 2 bis 6 umfasst das Kupplungssystem 12 einen Stutzen 13, der in die Buchse 8 einsteckbar ist und der an einem Ende des Schlauchs 7 angeordnet oder ausgebildet ist oder der das Ende des Schlauchs 7 bildet. Der Stutzen 13 weist an seiner Außenseite zumindest eine Ringnut 14 auf, die zur Aufnahme eines Dichtelements 15 dient. Desweiteren ist der Stutzen 13 an seiner Außenseite mit einer Befestigungskontur 16 ausgestattet.

Das erfindungsgemäße Kupplungssystem 12 umfasst außerdem ein Kupplungselement 17, das bezüglich des Stutzens 13 und des Schlauchs 7 sowie bezüglich der Buchse 8 ein separates Bauteil bildet. Das Kupplungselement 17 ist am Stutzen 13 befestigt. Hierzu weist das Kupplungselement 17 zumindest einen Befestigungshaken 18 auf, der mit der Befestigungskontur 16 zusammenwirkt. Dementsprechend ist das Kupplungselement 17 radial außen auf den Stutzen 13 aufgesteckt. Desweiteren ist das Kupplungselement 17 mit wenigstens einem Rasthaken 19 ausgestattet, mit dessen Hilfe das Kupplungselement 17 an der Buchse 8 festlegbar ist. Hierzu wirkt der jeweilige Rasthaken 19 mit einer Rastkontur 20 zusammen, die an der Außenseite der Buchse 8 ausgebildet ist. Dabei ist das Kupplungselement 17 im eingesteckten Zustand des Stutzens 13 radial außen auf die Buchse 8 aufgesteckt.

Vorzugsweise besitzt das Kupplungselement 17 zwei derartige Rasthaken 19, die zueinander diametral gegenüberliegend angeordnet sind. Grundsätzlich ist auch eine Ausführungsform mit mehr als zwei Rasthaken 19 möglich. Die einzelnen Rasthaken 19 erstrecken sich parallel zur Längsrichtung des Stutzens 13 und gehen dabei von einem Basisring 21 des Kupplungselements 17 aus. An ihrem vom Basisring 21 entfernten freien Ende sind die Rasthaken 19 mit Rastnasen 22 ausgestattet, welche im eingesteckten Zustand die Rastkontur 20 axial hintergreifen. Vorzugsweise ist die Rastkontur 20 wie hier als Ringstufe ausgebildet, die im Profil rampenförmig gestaltet ist. Beim Stecken des Stutzens 13 bewirkt die Rampenform der Rastkontur 20 eine radiale Verdrängung der Rasthaken 19. Da die Rasthaken 19 in sich radial steif ausgestaltet sind, erfolgt die radiale Aufweitung der Rasthaken 19 im Bereich der Rastnasen 22 durch eine federelastische Biegeverformung im Bereich des Basisrings 21. Nach Überschreiten der Rastkontur 20 federn die Rasthaken 19 radial nach innen zurück, wodurch die Rastnasen 22 die Rastkontur 20 hintergreifen.

Vorzugsweise ist die Rastkontur 20 - wie hier - als Ringstufe ausgestaltet. Ebenso ist grundsätzlich auch eine Ausführungsform der Rastkontur 20 als Ringnut denkbar. Die ringförmige Rastkontur 20 ermöglicht zum einen Relativdrehungen zwischen dem Kupplungselement 17 und der Buchse 8 und erleichtert zum anderen das Herstellen der Verbindung zwischen Schlauch 7 und Buchse 8 sowie ggf. das Auflösen dieser Verbindung. Grundsätzlich sind jedoch auch andere Ausführungsformen möglich, bei denen die Rastkontur 20 beispielsweise aus einem oder mehreren umfangsmäßig begrenzten Segmenten besteht. Gleichzeitig kann eine Axialführung zwischen Kupplungselement 17 und Buchse 8 vorgesehen sein, so dass das Kupplungselement 17 nur in einer dafür vorgesehenen relativen Drehlage zwischen Kupplungselement 17 und Buchse 8 aufsteckbar ist.

Bei der hier gezeigten, bevorzugten Ausführungsform ist jeder Rasthaken 19 mit einem Lösehebel 23 versehen. Durch die Betätigung des Lösehebels 23 kann der jeweilige Rasthaken 19 von der Rastkontur 20 ausgerastet werden. Die Lösehebel 23 sind hier so ausgestaltet, dass sie eine Verlängerung des jeweiligen Rasthakens 19 bilden, die von der Buchse 8 weggerichtet ist. Dabei steht der jeweilige Lösehebel 23 vom Basisring 21 frei ab, so dass der jeweilige Lösehebel 23 in einem vom Basisring 21 entfernten Bereich insbesondere manuell radial nach innen gedrückt werden kann. Da auch die Lösehebel 23 in sich relativ steif ausgestaltet sind, führt diese Betätigung und Schwenkbewegung der Lösehebel 23 wieder zu einer flexiblen Deformation im Bereich des Basisrings 21. Der Bereich des Basisrings 21 wirkt dabei als Drehlager für die durch die Lösehebel 23 verlängerten Rasthaken 19. Dementsprechend führt die Betätigung eines Lösehebels 23 zu einer von der Buchse 8 weggerichteten Schwenkverstellung des zugehörigen Rasthakens 19. Durch die beiden diametral angeordneten Rasthaken 19 und somit durch die beiden diametral angeordneten Lösehebel 23 lässt sich das erfindungsgemäße Kupplungssystem 12 mit zwei Fingern zum Ausrasten betätigen und von der Buchse 8 abziehen. Dabei ist von besonderem Vorteil, dass die manuell betätigbaren Enden der Lösehebel 23 relativ weit von den Rastnasen 22 entfernt sind, da dadurch die manuelle Erreichbarkeit des Kupplungssystems 12 zum Lösen der Verbindung zwischen Buchse 8 und Schlauch 7 verbessert ist.

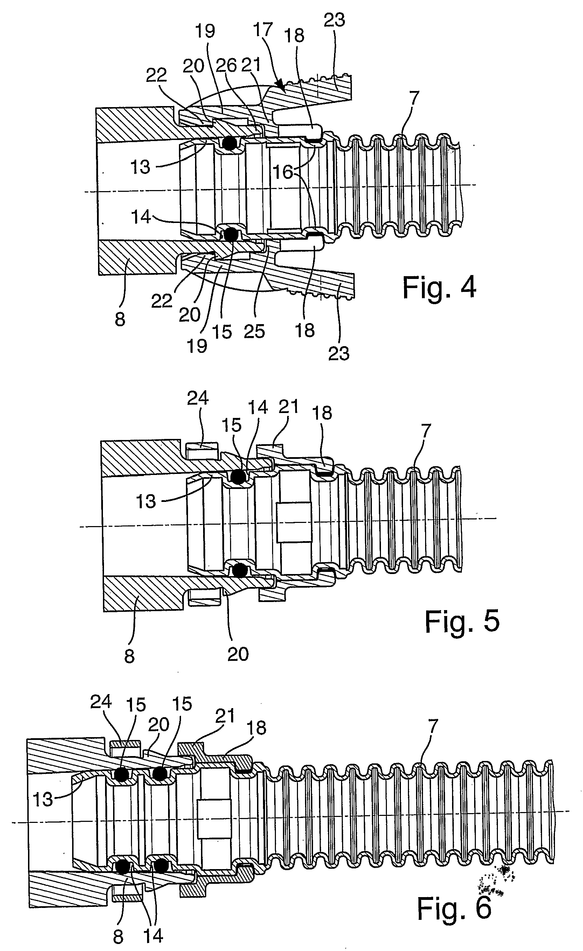

Das Kupplungselement 17 ist bei den hier gezeigten Ausführungsformen außerdem mit einem Ringband 24 ausgestattet, welches die Rasthaken 19 an einem vom Schlauch 7 abgewandten Endbereich miteinander verbindet. Durch dieses Ringband 24 kann die Rastwirkung der Rasthaken 19 verstärkt werden. Das Ringband 24 weist zumindest quer zu den Rasthaken 19 Radialspiel auf (vergleiche die Fig. 5 und 6), um den Rasthaken 19 die zum Ausrasten erforderliche Beweglichkeit zu geben. Beispielsweise besitzt das Ringband 24 einen ovalen Querschnitt, während die Buchse 8 einen Kreisquerschnitt aufweist.

Vorzugsweise ist die Ringnut 14 zur Aufnahme des Dichtelements 15, das beispielsweise ein O-Ring ist, in einem Axialabschnitt des Stutzens 13 angeordnet, der sich im eingesteckten Zustand etwa auf der Höhe der Rastkontur 20 befindet. Auf diese Weise wird der zur Verfügung stehende Bauraum besonders geschickt ausgenutzt, da an der Buchse 8 radial innen die Abdichtung über das Dichtelement 15 erfolgt, während an der Buchse 8 außen über die Rastkontur 20 die Verrastung mit dem Kupplungselement 17 und somit die Verbindung zwischen Buchse 8 und Schlauch 7 realisiert wird. Die Buchse 8 kann dadurch in axialer Richtung extrem kurz bauen. Eine axial kurze Baulänge wird schlauchseitig auch dadurch erreicht, dass zumindest bei den Ausführungsformen der Fig. 4 und 5 die Rasthaken 19 und der Stutzen 13 an einer vom Schlauch 7 abgewandten Seite im wesentlichen axial bündig enden.

Um das Kupplungselement 17 möglichst fest am Stutzen 13 zu befestigen, können zweckmäßig eine Vielzahl von Befestigungshaken 18 vorgesehen sein, die jeweils formschlüssig mit der Befestigungskontur 16 zusammenwirken. Die Befestigungshaken 18 sind dabei in Umfangsrichtung verteilt angeordnet. Im vorliegenden Fall ist die Befestigungskontur 16 nach Art einer Ringnut ausgebildet, in welche krallenartige Vorsprünge der Befestigungshaken 18 formschlüssig eingreifen. Auf diese Weise ist das Kupplungselement 17 in axialer Richtung am Stutzen 13 fixiert. Vorzugsweise kann jedoch das Kupplungselement 17 um die Längsachse des Stutzens 13 drehbar am Stutzen 13 angebracht sein. Dabei ist grundsätzlich eine freie, unbegrenzte Verdrehbarkeit zwischen Kupplungselement 17 und Stutzen 13 möglich. Ebenso kann durch entsprechende Anschläge eine Drehbarkeit nur für einen vorbestimmten Winkelbereich zwischen Kupplungselement 17 und Stutzen 13 realisiert sein. Die Drehbarkeit zwischen Kupplungselement 17 und Stutzen 13 vereinfacht die Montage, da sich das Kupplungselement 17 dadurch besonders einfach optimal ausrichten lässt.

Der Basisring 21 am Kupplungselement 17 ist gestuft ausgestaltet. An einem radial innen liegenden Bereich des Basisrings 21 stehen die Befestigungshaken 18 axial in Richtung Schlauch 7 ab. Im Unterschied dazu sind die Rasthaken 19 an einem radial außen liegenden Bereich des Basisrings 21 angeordnet, wobei die Rasthaken 19 in einer vom Schlauch 7 weggerichteten Richtung vom Basisring 21 abstehen. Der Basisring 21 bildet durch sein gestuftes Profil zusammen mit der Außenseite des Stutzens 13 eine Ringaufnahme 24 aus, die axial offen ist, und zwar zur Buchse 8 hin. Im gesteckten Zustand greift ein Axialende 25 der Buchse 8 in diese Ringaufnahme 24 ein. Auf diese Weise übergreift der Basisring 21 die Buchse 8 in axialer Richtung zumindest teilweise, wodurch sich eine besonders stabile Verbindung zwischen Schlauch 7 und Buchse 8 realisieren lässt.

Bevorzugt ist das Kupplungselement 17 aus einem Stück hergestellt. Das heißt, dass der Basisring 21, die Rasthaken 19, deren Lösehebel 23 und die Befestigungshaken 18 zusammen ein integrales Bauteil bilden, das beispielsweise im Spritzgussverfahren hergestellt ist.

Vorzugsweise handelt es sich beim Schlauch 7 um einen Wellschlauch. Grundsätzlich sind jedoch auch andere Schlaucharten möglich. Wellschläuche zeichnen sich durch eine hohe Druckstabilität und durch eine vergleichsweise hohe Flexibilität gegenüber Biegung aus. Vorzugsweise ist der Stutzen 13 mit dem Schlauch 7 aus einem Stück hergestellt. Der Stutzen 13 ist dadurch in den Schlauch 7 bzw. in den Herstellungsprozess des Schlauchs 7 integriert, was Kostenvorteile bringt. Bevorzugt lässt sich der Schlauch 7 mit daran ausgebildetem Stutzen 13 als Blasformteil herstellen. Blasformteile zeichnen sich durch relativ enge Herstellungstoleranzen bezüglich ihrer Außenkonturen aus. Da sowohl beim Schlauch 7 als auch beim Stutzen 13 die Außenkonturen von besonderer Bedeutung sind, ergeben sich hier Qualitätsvorteile. Enge Maßtoleranzen für die Außenkontur des Stutzens 13 vereinfachen außerdem die Realisierung einer hinreichenden Abdichtung mit Hilfe des Dichtelements 15. Gleichzeitig vereinfacht sich dadurch die Montage und die Demontage. Je größer die Maßtoleranzen, desto mehr Spiel muss das Dichtelement 15 ausgleichen können.

Bei den hier gezeigten Ausführungsformen ist der Stutzen 13 jeweils als gerades Rohrstück ausgestaltet, der geradlinig in den Schlauch 7 übergeht. Für bestimmte Anwendungsfälle oder Einbausituationen kann es jedoch zweckmäßig sein, den Stutzen 13 als Bogenstück oder als Winkelstück auszugestalten. Bei einer solchen Ausführungsform schließt sich an den hier gezeigten geradlinigen Abschnitt des Stutzens 13 ein entsprechender Bogenabschnitt oder Winkelabschnitt an, der dann den Übergang zwischen dem geradlinigen Abschnitt und dem Schlauch 7 bildet. Bogenstücke und Winkelstücke sind insbesondere dann zweckmäßig, wenn Biegeradien oder Winkel realisiert werden sollen, die mit dem Schlauch 7 nicht darstellbar sind.

Bei den hier gezeigten Ausführungsformen weist der Schlauch 7 ebenso wie der Stutzen 13 und die Buchse 8 einen kreisförmigen Querschnitt auf. Grundsätzlich sind jedoch auch andere Ausführungsformen denkbar, beispielsweise mit ovalem Querschnitt oder mit mehreckigen Querschnitten, wie z. B. Sechseckquerschnitt, Achteckquerschnitt und Rechteckquerschnitt.

Der Stutzen 13 und der Schlauch 7 sind zweckmäßig hinsichtlich ihrer Strömungsquerschnitte so aufeinander abgestimmt, dass besagte Strömungsquerschnitte etwa gleich groß sind. Beispielsweise weichen die Strömungsquerschnitte um weniger als 15% oder um weniger als 10% voneinander ab. Auf diese Weise können in der Verbindung zwischen Schlauch 7 und Buchse 8 größere Querschnittssprünge vermieden werden, um einen unerwünschten Druckabfall im Schlauch 7 zu vermeiden.

Entsprechend Fig. 3 kann der Schlauch 7 grundsätzlich an seinen beiden Enden mit einem Stutzen 13 zur Realisierung des Kupplungssystems 12 nach der Erfindung versehen sein.

Während der Stutzen 13 bei den Ausführungsformen der Fig. 4 und 5 nur eine Ringnut 14 aufweist, ist bei der Ausführungsform gemäß Fig. 6 eine zweite Ringnut 14 vorgesehen, in der ein weiteres Dichtelement 15 angeordnet ist. Neben einer verbesserten Dichtigkeit führt diese Ausführungsform außerdem zu einer erhöhten Stabilität der Verbindung zwischen Schlauch 7 und Buchse 8.

Die Herstellung des erfindungsgemäßen Kupplungssystems 12 ist vergleichsweise preiswert. Zum einen kann der jeweilige Stutzen 13 integral am Schlauch 7 ausgebildet werden. Zum anderen lässt sich das Kupplungselement 17 einstückig herstellen. Des Weiteren lässt sich das Kupplungselement 17 relativ einfach automatisiert auf den Stutzen 13 aufstecken. Außerdem kann das Dichtelement 15 ebenfalls einfach automatisiert in die Ringnut 14 eingebracht werden. Die Herstellung der Verbindung zwischen Schlauch 7 und Buchse 8 vereinfacht sich ebenfalls, da das Kupplungssystem 12 eine selbsttätig einrastende Steckverbindung realisiert. Auch die Demontage ist relativ einfach, da die Lösehebel 23 ein einfaches Ausrasten der Rasthaken 19 ermöglichen. Des Weiteren ist die Zugänglichkeit der sich von der Buchse 8 weg erstreckenden Lösehebel 23 verbessert. Die Drehbarkeit des Kupplungselements 17 relativ zum Stutzen 13 erleichtert ebenfalls das Herstellen und ggf. das Lösen der Verbindung zwischen Schlauch 7 und Buchse 8. Von besonderer Bedeutung ist jedoch, dass das erfindungsgemäße Kupplungssystem 12 in axialer Richtung relativ klein baut, so dass insbesondere die Buchse 8 axial relativ kurz ausgestaltet sein kann. Dies ist im Hinblick auf die im Motorraum eines Kraftfahrzeugs gegebenen engen Raumverhältnissen von Vorteil.

## Patentansprüche

1. Brennkraftmaschine, insbesondere in einem Kraftfahrzeug,
- mit einer Frischluftanlage (2) zur Versorgung der Brennkraftmaschine (1) mit Frischluft (10),
- mit einer Entlüftungseinrichtung (3) zum Abführen von Blow-by-Gasen (9) aus der Brennkraftmaschine (1),
**dadurch gekennzeichnet,**
- **dass** ein Schlauch (7) der Entlüftungseinrichtung (3) mittels eines Kupplungssystems (12) an eine Buchse (8) einer Leitung (5) der Frischluftanlage (2) angeschlossen ist, um Blow-by-Gase (9) der Frischluft (10) zuzuführen,
- **dass** der Schlauch (7) an seinem Ende einen Stutzen (13) aufweist, der in die Buchse (8) eingesteckt ist und der an seiner Außenseite wenigstens eine Ringnut (14) und eine Befestigungskontur (16) aufweist,
- **dass** die Buchse (8) an ihrer Außenseite eine Rastkontur (20) aufweist,
- **dass** ein bezüglich der Buchse (8) und des Stutzens (13) separat hergestelltes Kupplungselement (17) vorgesehen ist, das außen auf den Stutzen (13) aufgesteckt ist,
- **dass** das Kupplungselement (17) wenigstens einen Rasthaken (19) aufweist, der bei in die Buchse (8) eingestecktem Stutzen (13) die Rastkontur (20) hintergreift,
- **dass** das Kupplungselement (17) wenigstens einen Befestigungshaken (18) aufweist, der zur axialen Fixierung des Kupplungselements (17) am Stutzen (13) mit der Befestigungskontur (16) zusammenwirkt,
- **dass** der jeweilige Rasthaken (19) einen Lösehebel (23) aufweist, der bei seiner Betätigung den Rasthaken (19) von der Rastkontur (20) ausrastet,
- **dass** der jeweilige Lösehebel (23) eine von der Buchse (8) weggerichtete Verlängerung des jeweiligen Rasthakens (19) bildet, und
- **dass** der jeweilige Lösehebel (23) von einem Basisring (21) des Kupplungselements (17) frei absteht, der im gesteckten Zustand zumindest teilweise die Buchse (8) übergreift.

2. Brennkraftmaschine nach Anspruch 1,
**dadurch gekennzeichnet,**
- **dass** der jeweilige Stutzen (13) mit dem Schlauch (7) aus einem Stück hergestellt ist, und/oder
- **dass** der Schlauch (7) mit dem jeweiligen Stutzen (13) als Blasformteil ausgestaltet ist, und/oder
- **dass** der Schlauch (7) als Wellschlauch ausgestaltet ist, und/oder
- **dass** der Stutzen (13) als gerades Rohrstück oder als Bogenstück oder als Winkelstück ausgestaltet ist, und/oder
- **dass** ein Strömungsquerschnitt des Schlauchs (7) und ein Strömungsquerschnitt des Stutzens (13) gleich groß sind oder um weniger als 15 % oder um weniger als 10 % voneinander abweichen, und/oder
- **dass** der jeweilige Stutzen (13) an seiner Außenseite zumindest zwei Ringnuten (14) jeweils zur Aufnahme eines Dichtelements (15) aufweist, und/oder
- **dass** das jeweilige Dichtelement (15) ein O-Ring ist, und/oder
- **dass** der Schlauch (7) einen kreisförmigen oder ovalen oder mehreckigen Querschnitt aufweist.

3. Brennkraftmaschine nach Anspruch 1 oder 2,
**dadurch gekennzeichnet,**
- **dass** die Befestigungskontur (16) als Ringstufe oder als Ringnut ausgestaltet ist, und/oder
- **dass** der jeweilige Befestigungshaken (18) formschlüssig mit der Befestigungskontur (16) zusammenwirkt, und/oder
- **dass** eine Vielzahl von Befestigungshaken (18) vorgesehen ist, die umfangsmäßig verteilt am Kupplungselement (7) angeordnet sind und die mit der Befestigungskontur (16) zur Axialfixierung des Kupplungselements (17) am Stutzen (13) zusammenwirken, und/oder
- **dass** das Kupplungselement (17) frei oder in einem vorbestimmten Winkelbereich drehbar am Stutzen (13) angeordnet ist.

4. Brennkraftmaschine nach einem der Ansprüche 1 bis 3, **dadurch gekennzeichnet,**
- **dass** zumindest oder genau zwei Rasthaken (19) vorgesehen sind, die einander diametral gegenüberliegend angeordnet sind, und/oder
- **dass** der jeweilige Rasthaken (19) und der Stutzen (13) axial bündig enden, und/oder
- **dass** der jeweilige Rasthaken (19) eine Rastnase (22) aufweist, die im gesteckten Zustand mit der Rastkontur (20) zusammenwirkt, und/oder
- **dass** die Rastkontur (20) durch eine Ringstufe oder durch eine Ringnut gebildet ist, und/oder
- **dass** die Rasthaken (19) an einem vom Schlauch (7) abgewandten Endbereich durch ein Ringband (24) miteinander verbunden sind.

5. Brennkraftmaschine nach einem der Ansprüche 1 bis 4, **dadurch gekennzeichnet,**
- **dass** das Kupplungselement (17) aus einem Stück hergestellt ist, und/oder
- **dass** das Kupplungselement (17) einen Basisring (21) aufweist, von dem einerseits der wenigstens eine Rasthaken (19) und andererseits der wenigstens eine Befestigungshaken (18) ausgehen, und/oder
- **dass** ein Basisring (21) des Kupplungselements (17) mit der Außenseite des Stutzens (13) eine axial offene Ringaufnahme (25) ausbildet, in die im gesteckten Zustand ein Axialende (26) der Buchse (8) eingreift.

6. Verwendung eines Schlauchs (7) in einer Entlüftungseinrichtung (3) einer Brennkraftmaschine (1), die eine Frischluftanlage (2) zur Versorgung der Brennkraftmaschine (1) mit Frischluft (10) aufweist, wobei die Entlüftungseinrichtung (3) zum Abführen von Blow-by-Gasen (9) aus der Brennkraftmaschine (1) dient, wobei sich die Verwendung des Schlauchs (7) **dadurch kennzeichnet,**
- **dass** der Schlauch (7) der Entlüftungseinrichtung (3) mittels eines Kupplungssystems (12) an eine Buchse (8) einer Leitung (5) der Frischluftanlage (2) angeschlossen ist, um Blow-by-Gase (9) der Frischluft (10) zuzuführen,
- **dass** der Schlauch (7) an seinem Ende einen Stutzen (13) aufweist, der in die Buchse (8) eingesteckt ist und der an seiner Außenseite wenigstens eine Ringnut (14) und eine Befestigungskontur (16) aufweist,
- **dass** die Buchse (8) an ihrer Außenseite eine Rastkontur (20) aufweist,
- **dass** ein bezüglich der Buchse (8) und des Stutzens (13) separat hergestelltes Kupplungselement (17) vorgesehen ist, das außen auf den Stutzen (13) aufgesteckt ist,
- **dass** das Kupplungselement (17) wenigstens einen Rasthaken (19) aufweist, der bei in die Buchse (8) eingestecktem Stutzen (13) die Rastkontur (20) hintergreift,
- **dass** das Kupplungselement (17) wenigstens einen Befestigungshaken (18) aufweist, der zur axialen Fixierung des Kupplungselements (17) am Stutzen (13) mit der Befestigungskontur (16) zusammenwirkt,
- **dass** der jeweilige Rasthaken (19) einen Lösehebel (23) aufweist, der bei seiner Betätigung den Rasthaken (19) von der Rastkontur (20) ausrastet,
- **dass** der jeweilige Lösehebel (23) eine von der Buchse (8) weggerichtete Verlängerung des jeweiligen Rasthakens (19) bildet, und
- **dass** der jeweilige Lösehebel (23) von einem Basisring (21) des Kupplungselements (17) frei absteht, der im gesteckten Zustand zumindest teilweise die Buchse (8) übergreift.

## Claims

1. Internal combustion engine, in particular in a motor vehicle,
- comprising a fresh air system (2) to supply the internal combustion engine (1) with fresh air (10),
- comprising a ventilation unit (3) for removal of blow-by gases (9) from the internal combustion engine (1),
**characterised in that**,
- a tube (7) of the ventilation unit (3) is connected to a socket (8) of a pipe (5) of the fresh air system (2) by means of a coupling system (12), in order to feed blow-by gases (9) to the fresh air (10),
- the tube (7) comprises a connector (13) on the end thereof, which is inserted into the socket (8) and which has at least one annular groove (14) and one securing contour (16) on the external face thereof,
- the socket (8) comprises a latching contour (20) on the external face thereof,
- a coupling element (17) is provided which is produced separately from the socket (8) and the connector (13), and, which is fitted on the outside of the connector (13),
- the coupling element (17) comprises at least one latching hook (19), which engages behind the latching contour (20) when the connector (13) is inserted in the socket (8),
- the coupling element (17) comprises at least one securing hook (18), which interacts with the securing contour (16) in order to fix the coupling element (17) on the connector (13) in an axial manner,
- each latching hook (19) comprises a release lever (23), which when activated releases the latching hook (19) from the latching contour (20),
- each release lever (23) forms an extension from the socket (8) of the respective latching hook (19), and
- each release lever (23) protrudes free from a base ring (21) of coupling element (17), which at least partially engages over the socket (8), in the plugged-in state.

2. Internal combustion engine according to claim 1, **characterised in that**
- each connector (13) is produced together with the tube (7) from a single piece, and/or
- the tube (7) is designed together with the respective connector (13) as a blow-moulded part, and/or
- the tube (7) is designed as a corrugated tube, and/or
- the connector (13) is designed as a straight piece of pipe or as an elbow piece or as an angled piece, and/or
- a flow cross-section of the tube (7) and a flow cross-section of the connector (13) are equal or differ from one another by less than 15% or less than 10%, and/or
- each connector (13) comprises at least two annular grooves (14) on the outside thereof to accommodate a sealing element (15), and/or
- each sealing element (15) is an O-ring, and/or
- the tube (7) has a circular or oval or polygonal cross-section.

3. Internal combustion engine according to claim 1 or 2, **characterised in that**
- the securing contour (16) is designed as an annular step or as an annular groove, and/or
- each securing hook (18) interacts in a form-fitting manner with the securing contour (16), and/or
- a plurality of securing hooks (18) are provided, which are arranged distributed around the circumference on the coupling element (7) and which interact with the securing contour (16) in order to fix the coupling element (17) on the connector (13) in an axial manner, and/or
- the coupling element (17) is arranged to be rotated freely or within a predetermined angular range on the connector (13).

4. Internal combustion engine according to one of claims 1 to 3, **characterised in that**
- at least or exactly two latching hooks (19) are arranged diametrically opposed to each other, and/or
- the respective latching hook (19) and the connector (13) end axially flush, and/or
- the latching hook (19) comprises a latching lug (22) which interacts with the latching contour (20) in the plugged-in state, and/or
- the latching contour (20) is formed by an annular step or by an annular groove, and/or
- the latching hooks (19) are connected to one another in an end region remote from the tube (7) by an annular band (24).

5. Internal combustion engine according to one of claims 1 to 4, **characterised in that**
- the coupling element (17) is produced from a single piece, and/or
- the coupling element (17) comprises a base ring (21), from which extends at least one latching hook (19) and at least one securing hook (18), and/or
- a base ring (21) of the coupling element (17) forms an axially open annular receptacle (25) with the outer side of the connector (13), in which an axial end (26) of the socket (8) engages, in the plugged-in state.

6. Use of a tube (7) in a ventilation unit (3) of an internal combustion engine (1) which comprises a fresh air system (2) to supply the internal combustion engine (1) with fresh air (10), wherein the ventilation unit (3) serves to remove blow-by gases (9) from the internal combustion engine (1), wherein the use of the tube (7) is **characterised in that**,
- the tube (7) is connected to the ventilation unit (3) by means of a coupling system (12) on a socket (8) of a pipe (5) of the fresh air system (2), in order to feed blow-by gases (9) to the fresh air (10),
- the tube (7) comprises a connector (13) on the end thereof, which is inserted into the socket (8) and which has at least one annular groove (14) and one securing contour (16) on the external face thereof,
- the socket (8) comprises a latching contour (20) on the external face thereof,
- a coupling element (17) is provided which is produced separately from the socket (8) and the connector (13), and, which is fitted on the outside of the connector (13),
- the coupling element (17) comprises at least one latching hook (19), which engages behind the latching contour (20) when the connector (13) is inserted in the socket (8),
- the coupling element (17) comprises at least one securing hook (18), which interacts with the securing contour (16) in order to fix the coupling element (17) on the connector (13) in an axial manner,
- each latching hook (19) comprises a release lever (23), which when activated releases the latching hook (19) from the latching contour (20),
- each release lever (23) forms an extension from the socket (8) of the respective latching hook (19), and
- each release lever (23) protrudes free from a base ring (21) of coupling element (17), which at least partially engages over the socket (8), in the plugged-in state.

## Revendications

1. Moteur à combustion interne, en particulier dans un véhicule automobile,
- comprenant un système d'arrivée d'air frais (2) permettant d'alimenter le moteur à combustion interne (1) en air frais (10),
- comprenant un dispositif de ventilation (3) permettant d'évacuer les gaz de carter (9) du moteur à combustion interne (1),
**caractérisé**
- **en ce qu'**un tuyau flexible (7) du dispositif de ventilation (3) est raccordé à une douille (8) d'une conduite (5) du système d'arrivée d'air frais (2) au moyen d'un système d'accouplement (12), afin d'amener les gaz de carter (9) à l'air frais (10),
- **en ce que** le tuyau flexible (7) présente à son extrémité un embout (13) qui est inséré dans la douille (8) et qui présente sur son côté extérieur au moins une gorge annulaire (14) et un contour de fixation (16),
- **en ce que** la douille (8) présente sur son côté extérieur un contour de blocage (20),
- **en ce qu'**un élément d'accouplement (17) fabriqué séparément de la douille (8) et de l'embout (13) est prévu, qui est emboîté à l'extérieur sur l'embout (13),
- **en ce que** l'élément d'accouplement (17) comprend au moins un crochet de blocage (19) qui, lorsque l'embout (13) est inséré dans la douille (8), vient coopérer, par l'arrière, avec le contour de blocage (20),
- **en ce que** l'élément d'accouplement (17) comprend au moins un crochet de fixation (18) qui coopère avec le contour de fixation (16) pour fixer axialement l'élément d'accouplement (17) sur l'embout (13),
- **en ce que** le crochet de blocage (19) concerné comprend un levier de desserrage (23) qui, lorsqu'il est actionné, dégage le crochet de blocage (19) du contour de blocage (20),
- **en ce que** le levier de desserrage (23) concerné forme un prolongement, orienté à l'opposé de la douille (8), du crochet de blocage (19) concerné, et
- **en ce que** le levier de desserrage (23) concerné fait librement saillie d'une bague de base (21) de l'élément d'accouplement (17) qui, une fois insérée, recouvre au moins en partie la douille (8)

2. Moteur à combustion interne selon la revendication 1, **caractérisé**
- **en ce que** l'embout (13) concerné est fabriqué d'une seule pièce avec le tuyau flexible (7), et/ou
- **en ce que** le tuyau flexible (7) est réalisé avec l'embout (13) concerné sous la forme d'une pièce moulée par soufflage, et/ou
- **en ce que** le tuyau flexible (7) est réalisé sous la forme d'un tuyau flexible ondulé, et/ou
- **en ce que** l'embout (13) est réalisé sous la forme d'une pièce tubulaire rectiligne ou sous la forme d'une pièce arquée ou sous la forme d'une pièce coudée, et/ou
- **en ce qu'**une section transversale d'écoulement du tuyau flexible (7) et une section transversale d'écoulement de l'embout (13) sont de même dimension ou diffèrent l'une de l'autre de moins de 15 % ou de moins de 10 %, et/ou
- **en ce que** l'embout (13) concerné comprend sur son côté extérieur au moins deux gorges annulaires (14) permettant de loger chacune un élément d'étanchéité (15), et/ou
- **en ce que** l'élément d'étanchéité (15) concerné est un joint torique, et/ou
- **en ce que** le tuyau flexible (7) présente une section transversale circulaire ou ovale ou polygonale.

3. Moteur à combustion interne selon la revendication 1 ou 2, **caractérisé**
- **en ce que** le contour de fixation (16) est réalisé sous la forme d'un gradin annulaire ou sous la forme d'une gorge annulaire, et/ou
- **en ce que** le crochet de fixation (18) concerné coopère par complémentarité de formes avec le contour de fixation (16), et/ou
- **en ce qu'**une pluralité de crochets de fixation (18) sont prévus, qui sont agencés en étant répartis sur la périphérie de l'élément d'accouplement (7) et qui coopèrent avec le contour de fixation (16) pour fixer axialement l'élément d'accouplement (17) sur l'embout (13), et/ou
- **en ce que** l'élément d'accouplement (17) est agencé sur l'embout (13) de manière à pouvoir tourner librement ou dans une plage angulaire prédéfinie.

4. Moteur à combustion interne selon l'une quelconque des revendications 1 à 3, **caractérisé**
- **en ce qu'**au moins ou exactement deux crochets de blocage (19) sont prévus, qui sont agencés de manière à être diamétralement opposés l'un à l'autre, et/ou
- **en ce que** le crochet de blocage (19) concerné et l'embout (13) terminent axialement en affleurement, et/ou
- **en ce que** le crochet de blocage (19) concerné comprend un tenon de blocage (22) qui, une fois inséré, coopère avec le contour de blocage (20), et/ou
- **en ce que** le contour de blocage (20) est formé par un gradin annulaire ou par une gorge annulaire, et/ou
- **en ce que** les crochets de blocage (19) sont reliés les uns aux autres par un ruban annulaire (24) sur une zone d'extrémité opposée au tuyau flexible (7).

5. Moteur à combustion interne selon l'une quelconque des revendications 1 à 4, **caractérisé**
- **en ce que** l'élément d'accouplement (17) est fabriqué d'une seule pièce, et/ou
- **en ce que** l'élément d'accouplement (17) comprend une bague de base (21) dont partent d'une part le ou les crochets de blocage (19) et d'autre part le ou les crochets de fixation (18), et/ou
- **en ce qu'**une bague de base (21) de l'élément d'accouplement (17) forme avec le côté extérieur de l'embout (13) un logement annulaire (25) ouvert axialement dans lequel, une fois la bague insérée, se loge une extrémité axiale (26) de la douille (8).

6. Utilisation d'un tuyau flexible (7) dans un dispositif de ventilation (3) d'un moteur à combustion interne (1), lequel moteur comprend un système d'arrivée d'air frais (2) permettant d'alimenter le moteur à combustion interne (1) en air frais (10), dans laquelle le dispositif de ventilation (3) sert à évacuer les gaz de carter (9) du moteur à combustion interne (1), dans laquelle l'utilisation du tuyau flexible (7) se **caractérise**
- **en ce que** le tuyau flexible (7) du dispositif de ventilation (3) est raccordé à une douille (8) d'une conduite (5) du système d'arrivée d'air frais (2) au moyen d'un système d'accouplement (12), afin d'amener les gaz de carter (9) à l'air frais (10),
- **en ce que** le tuyau flexible (7) présente à son extrémité un embout (13) qui est inséré dans la douille (8) et qui présente sur son côté extérieur au moins une gorge annulaire (14) et un contour de fixation (16),
- **en ce que** la douille (8) présente sur son côté extérieur un contour de blocage (20),
- **en ce qu'**un élément d'accouplement (17) fabriqué séparément de la douille (8) et de l'embout (13) est prévu, qui est emboîté à l'extérieur sur l'embout (13),
- **en ce que** l'élément d'accouplement (17) comprend au moins un crochet de blocage (19) qui, lorsque l'embout (13) est inséré dans la douille (8), vient coopérer, par l'arrière, avec le contour de blocage (20),
- **en ce que** l'élément d'accouplement (17) comprend au moins un crochet de fixation (18) qui coopère avec le contour de fixation (16) pour fixer axialement l'élément d'accouplement (17) sur l'embout (13),
- **en ce que** le crochet de blocage (19) concerné comprend un levier de desserrage (23) qui, lorsqu'il est actionné, dégage le crochet de blocage (19) du contour de blocage (20),
- **en ce que** le levier de desserrage (23) concerné forme un prolongement, orienté à l'opposé de la douille (8), du crochet de blocage (19) concerné, et
- **en ce que** le levier de desserrage (23) concerné fait librement saillie d'une bague de base (21) de l'élément d'accouplement (17) qui, une fois insérée, recouvre au moins en partie la douille (8).
